# EUROPEAN PATENT SPECIFICATION

(11) **EP 4 684 502 B1**
(45) Date of publication and mention of the grant of the patent: **21.10.2026**
(21) Application number: 24707446.1
(22) Date of filing: 15.02.2024
(51) Int. Cl.: H04L 9/08, H04L 9/32, H04L 9/00

(54) **METHOD FOR MANAGING A BATCH OF SECURE ELEMENTS**
VERFAHREN ZUR VERWALTUNG EINER CHARGE SICHERER ELEMENTE
PROCÉDÉ DE GESTION D'UN LOT D'ÉLÉMENTS SÉCURISÉS

(30) Priority: 22.03.2023 EP 23305386
(43) Date of publication of application: 28.01.2026
(73) Proprietor: THALES DIS FRANCE SAS, 92190 Meudon (FR)
(72) Inventor: DURAND, Stéphane, 13705 La Ciotat (FR)
(74) Representative: Grevin, Emmanuel
(86) International application number: PCT/EP2024/053932
(87) International publication number: WO 2024/193913

(56) References cited:
- EP-A1- 3 965 039
- WO-A1-2012/122994
- US-A1- 2019 280 864

## Description

### (Field of the invention)

The present invention relates to methods for managing a batch of hardware secure elements. It relates particularly to methods for managing point-to-point transactions between two hardware secure elements.

### (Background of the invention)

In the context of an increasing interest of central banks towards Central Bank Digital Currencies, (CBDC), some propositions for CBDC rely on hardware secure devices that are usable without network connectivity, while others proposition rely on secure devices requiring online-only schemes.

The present document focuses on propositions for CBDC domain relying on hardware secure devices that are usable without network connectivity (I.e. in offline mode). Although hardware secure devices are supposed to implement a large panel of security measures, the possibility of defrauded secure devices remains possible on the field.

A central transaction collector (CTC) may be in charge of collecting history of offline transactions carried out by secure devices. Although secure devices can handle offline transactions, they are supposed to periodically connect the CTC and upload their transaction logs, for example when they have reach a ceiling on their capacity.

Based on the retrieved transaction logs, the CTC can detect fraudulent secure devices by performing correlation checks across the offline transactions.

### (Summary of the Invention)

There is need to increase security for offline transactions involving a hardware secure element that may be a malevolent device.

The invention aims at solving the above mentioned technical problem.

When a defrauded secure device is detected, the CTC can put it in a blacklist and propagate the blacklist to as much as possible secure devices of the fleet. Unfortunately, the sending of the blacklist can be performed only for secure devices that connect the CTC and such a connection depends on behavior of each secure device. In addition, it could happen that the size of the blacklist exceeds the memory size of the secure devices. That is why the invention proposes a solution in which the secure elements are not supposed to store a blacklist.

Based on sets of certificates embedded in the hardware secure elements, each hardware secure element involved in an offline transaction can assess the level of risk of being in the presence of an unreliable hardware secure element and take the decision to stop the transaction accordingly.

An object of the present invention is a method for managing a batch of hardware secure elements. The batch comprises at least a first secure element and a second secure elements. The first secure element comprises a first local certificate, a first global certificate, both generated by a certificate authority, and a public key part of a master key uniquely assigned to said certificate authority. The second secure element comprises a second local certificate, a second global certificate, both generated by the certificate authority, and said public key part. When a point-to-point transaction occurs between the first and second secure elements, the first secure element performs a comparison between a first temporary key identifier extracted from the first global certificate and a second temporary key identifier extracted from the second global certificate. If said comparison shows that said first and second temporary key identifiers are equal, the first secure element performs a first verification of a local signature of the second local certificate using a public part of a temporary key included in said first global certificate. If said first verification shows that the local signature is valid, the first secure element extracts a local public key from the second local certificate and pursues the point-to-point transaction using the local public key to trust transaction parameters exchanged with said second secure element. If said first verification shows that the local signature is invalid, the first secure element rejects the point-to-point transaction. If said comparison shows that said first and second temporary key identifiers are different, depending at least one additional check performed by the first secure element, the first secure element rejects the point-to-point transaction or performs a second verification of a global signature of the second global certificate using a public part of a master key stored in said first secure element. If said second verification shows that the global signature is valid, the first secure element performs a third verification of a local signature of the second local certificate using a public part of a temporary key included in said second global certificate. If said second verification shows that the global signature is invalid or said third verification shows that the local signature is invalid, the first secure element rejects the point-to-point transaction. If said third verification shows that the local signature is valid, the first secure element extracts a local public key from the second local certificate and pursues the point-to-point transaction using the local public key to trust transaction parameters exchanged with said second secure element.

Advantageously, if said comparison shows that said first and second temporary key identifiers are different, the first secure element may perform a control using a first temporary key date extracted from the first global certificate and a second temporary key date extracted from the second global certificate. The first secure element may perform a fourth verification of a global signature of the second global certificate using the public part of the public key part of the master key stored in said first secure element. If said control shows that said second temporary key date is later than said first temporary key and said fourth verification shows that the global signature is valid, the first secure element may perform said third verification of the local signature of the second local certificate using the public part of the temporary key. If said fourth verification shows that the global signature is invalid, the first secure element may reject the point-to-point transaction.

Advantageously, if said control shows that said second temporary key date is not later than said first temporary key, the first secure element may perform a risk assessment using both said first and second temporary key dates. If said risk assessment is passed, the first secure element may perform said fourth verification. If said risk assessment is not passed, the first secure element may reject the point-to-point transaction.

Advantageously, said risk assessment may be performed using a first fraudulent indicator extracted from the first local certificate and/or a second fraudulent indicator extracted from the second local certificate.

Advantageously, a central transaction collector, CTC, may maintain a blacklist of secure elements deemed to be compromised. When a predefined event occurs, the CTC may request the Certificate Authority to generate a new temporary key and a new global certificate. When an online channel is established between the CTC and a connected secure element belonging to the batch, if the secure element does not belong to the blacklist, the CTC may request the Certificate Authority to generate a new local certificate tied to the connected secure element and may send both the new local certificate and the new global certificate to the connected secure element.

Advantageously, when said online channel is established between the CTC and said connected secure element, the CTC may retrieve a transaction log from the connected secure element and may apply a correlation check to the retrieved transaction log. If the correlation check shows that the connected secure element is fraudulent, then the CTC may include the connected secure element in the blacklist.

Advantageously, the predefined event may be a detection of a fraudulent secure element by the central transaction collector.

Advantageously, the predefined event may be a preset timer.

Advantageously, each secure element of the batch may comprise its own purse balance of a digital currency and its own transaction log. The point-to-point transaction may be a transfer of value from the first secure element acting as a payer to the second secure element acting as payee. If the second secure element accepts the point-to-point transaction, the second secure element may update both its own transaction log and an internal representation of its own purse balance with said transaction information.

Advantageously, each of the secure elements of the batch may be one of the following types: smart card, ring, keychain and bracelet.

Another object of the present invention is a system comprising a batch of hardware secure elements, said batch comprising a first secure element and a second secure elements. The first secure element comprises a first local certificate, a first global certificate, both generated by a certificate authority, and a public key part of a master key uniquely assigned to said certificate authority. The second secure element comprises a second local certificate, a second global certificate, both generated by the certificate authority, and said public key part. When a point-to-point transaction occurs between said first and second secure elements, the first secure element is configured to perform a comparison between a first temporary key identifier extracted from the first global certificate and a second temporary key identifier extracted from the second global certificate. If said comparison shows that said first and second temporary key identifiers are equal, the first secure element is configured to perform a first verification of a local signature of the second local certificate using a public part of a temporary key included in said first global certificate. If said first verification shows that the local signature is valid, the first secure element is configured to extract a local public key from the second local certificate and to pursue the point-to-point transaction using the local public key to trust transaction parameters exchanged with said second secure element. If said first verification shows that the local signature is invalid, the first secure element is configured to reject the point-to-point transaction. If said comparison shows that said first and second temporary key identifiers are different, depending at least one additional check performed by the first secure element, the first secure element is configured to reject the point-to-point transaction or to perform a second verification of a global signature of the second global certificate using a public part of a master key stored in said first secure element. If said second verification shows that the global signature is valid, the first secure element is configured to perform a third verification of a local signature of the second local certificate using a public part of a temporary key included in said second global certificate. If said second verification shows that the global signature is invalid or said third verification shows that the local signature is invalid, the first secure element is configured to reject the point-to-point transaction. If said third verification shows that the local signature is valid, the first secure element is configured to extract a local public key from the second local certificate and to pursue the point-to-point transaction using the local public key to trust transaction parameters exchanged with said second secure element.

Advantageously, if said comparison shows that said first and second temporary key identifiers are different, the first secure element may be configured to perform a control using a first temporary key date extracted from the first global certificate and a second temporary key date extracted from the second global certificate. The first secure element may be configured to perform a fourth verification of a global signature of the second global certificate using the public part of the public key part of the master key stored in said first secure element. If both said control shows that said second temporary key date is later than said first temporary key and said fourth verification shows that the global signature is valid, the first secure element may be configured to perform said first verification of the local signature of the second local certificate using the public part of the temporary key included in said first global certificate. If said fourth verification shows that the global signature is invalid, the first secure element may be configured to reject the point-to-point transaction.

Advantageously, if said control shows that said second temporary key date is not later than said first temporary key, the first secure element may be configured to perform a risk assessment using both said first and second temporary key dates. If said risk assessment is passed, the first secure element may be configured to perform said fourth verification and if said risk assessment is not passed, the first secure element may be configured to reject the point-to-point transaction.

Advantageously, said risk assessment may be performed using a first fraudulent indicator extracted from the first local certificate and/or a second fraudulent indicator extracted from the second local certificate.

Advantageously, the system may comprises a central transaction collector, CTC, configured to maintain a blacklist of secure elements deemed to be compromised. When a predefined event occurs, the CTC may be configured to request the certificate authority to generate a new temporary key and a new global certificate. When an online channel is established between the CTC and a connected secure element belonging to the batch, if the secure element does not belong to the blacklist, the CTC may be configured to request the certificate authority to generate a new local certificate tied to the connected secure element and to send both the new local certificate and the new global certificate to the connected secure element.

### (Brief description of the drawings)

Other characteristics and advantages of the present invention will emerge more clearly from a reading of the following description of a number of preferred embodiments of the invention with reference to the corresponding accompanying drawings in which:
Fig. 1 shows an exemplary flow diagram for provisioning a hardware secure element with a new set of certificates according to an example of the invention;
Fig. 2 shows a first part of an exemplary flow diagram for managing an offline transaction between two hardware secure elements according to an example of the invention;
Fig. 3 shows a second part of an exemplary flow diagram for managing an offline transaction between two hardware secure elements according to an example of the invention;
Fig. 4 shows a third part of an exemplary flow diagram for managing an offline transaction between two hardware secure elements according to an example of the invention;
Fig. 5 shows a fourth part of an exemplary flow diagram for managing an offline transaction between two hardware secure elements according to an example of the invention;
Fig. 6 shows a fifth part of an exemplary flow diagram for managing an offline transaction between two hardware secure elements according to an example of the invention;
Fig. 7 shows a diagram of architecture of a system for managing a batch of secure elements according to an example of the invention; and
Fig. 8 shows details of data stored in a certificate authority and two hardware secure elements according to an example of the invention.

### (Detailed description of the preferred embodiments)

The invention may apply to any type of hardware secure element. The invention is well suited for smart cards and can also apply to physical secure elements having a different form factor like a ring, a key fob or a bracelet.

Smart cards are portable small devices comprising a memory, a hardware processor and an operating system for computing treatments. They may comprise services applications like Payment, Access or Telecom applications. Such smart cards may comprise a plurality of memories of different types, like non-volatile memory and volatile memory. They are considered as tamper-resistant (or "secure") because they are able to control the access to the data they contain and to authorize or not the use of data by other machines. A smartcard may also provide computation services based on cryptographic components. In general, smartcards have limited computing resources and limited memory resources and they are intended to connect a host machine that provides them with electric power either in contact mode or in contactless mode. Some smart cards have their own embedded energy source.

Contact smart cards are usually designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

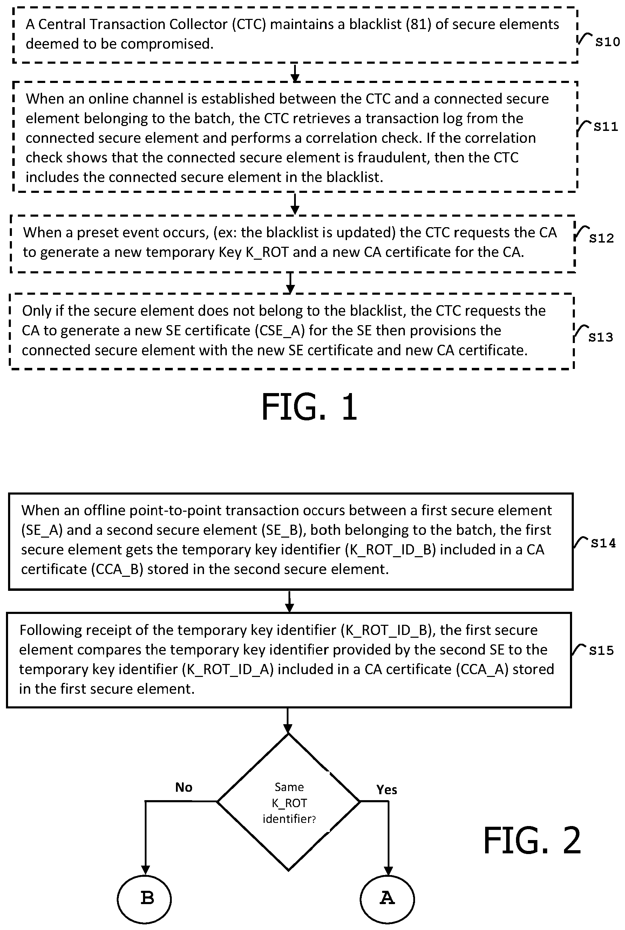

Fig. 1 depicts an exemplary flow diagram for provisioning a hardware secure element with a new set of certificates according to an example of the invention.

Each secure element of the batch 95 can act as a requester or a requestee during a transaction between two secure elements.

In this example, a batch (or fleet) of hardware secure elements handling digital currency is deployed on the field. Usually, each hardware secure element of the batch is assigned to an individual. In some cases, more than one secure element can be assigned to a single individual.

Each hardware secure element comprises its own purse balance, its own offline transaction log and a risk engine. The secure elements are able to carry out point-to-point transactions in pairs. These point-to-point transactions are considered offline because they do not require a connection to the Central Transaction Collector. Typically, a payer secure element transfers a money amount to a payee secure element so that the purse balance stored in the payer secure element is decreased by the amount of the transaction and the purse balance stored in the payee secure element is increased by the same amount. It could be noted that each secure element can store a specific internal representation of its own purse balance. For instance, the purse balance can be stored in a single field or recomputed from a plurality of source tokens.

The payer secure element updates its own offline transaction log with transaction data (like the amount, the identity of the payee secure element and the date for instance) and the payee secure element updates its own offline transaction log with transaction data. In such a case, the payer secure element acts as a requester and the payee secure element acts as a requestee.

An offline transaction (i.e. a transaction without connection to the CTC) can be performed through an intermediate hardware device that provides energy to the secure elements and acts as a reader able to alternate data exchange with both secure elements involved in the offline transaction. Although the two secure elements communicate through an intermediate device, the transaction between the two secure elements called a point-to-point transaction.

A Central Transaction Collector (CTC) is in charge of updating a set of certificates intended to be stored in all trusted secure elements of the batch. The Central Transaction Collector is in charge of retrieving the offline transaction log of the secure elements that connect the CTC and to perform a reconciliation of the transaction data extracted from the retrieved offline transaction logs.

The secure elements of the batch are able to connect the Central Transaction Collector through so-called online sessions to exchange data with the CTC.

For the sake of simplicity, steps involving the Central Transaction Collector (CTC) are presented first at Figure 1.

In some embodiments, at step S10, the central transaction collector (CTC) 10 maintains a blacklist 81 of hardware secure elements deemed to be compromised. The CTC stores the blacklist 12 in its memory. Initially, the blacklist could be assumed to be empty. The blacklist can be gradually filled with the identifiers of the hardware secure elements deemed to be hacked.

At step S11, when an online channel is established between the Central Transaction Collector and a connected secure element, the CTC may retrieve the offline transaction log of the connected secure element and may perform a correlation check to the retrieved transaction log. If the correlation check shows that the connected secure element is fraudulent, then the Central Transaction Collector may include an identifier of the connected secure element in the blacklist 81.

In addition, the Central Transaction Collector can declare a fraudulent secure element in the blacklist 81 when another entity (like a police officer) reports the secure element as being hacked.

When a preset event occurs, (for example: the blacklist is updated) the CTC requests the Certificate Authority (CA) 10 to generate a new temporary Key (K_ROT) and a new CA certificate (CCA) for the Certificate Authority at step S12.

In some embodiments, the preset event can be the detection of a fraudulent secure element by the central transaction collector or the fact that the CTC receives a notification (from another trusted entity) reflecting that a specific secure element has been detected as fraudulent.

In some embodiments, the preset event can be a predefined timer, for instance every 26 hours or every weeks.

At step S13, only if the connected secure element does not belong to the blacklist 81, the CTC requests the Certificate Authority 10 to generate a new SE certificate for the connected secure element then provisions the connected secure element with the new SE certificate and the new CA certificate generated at step S12. Consequently, secure elements listed in the blacklist 81 do not receive updated SE and CA certificates from the CTC. In other words, they remain with their previous SE and CA certificates.

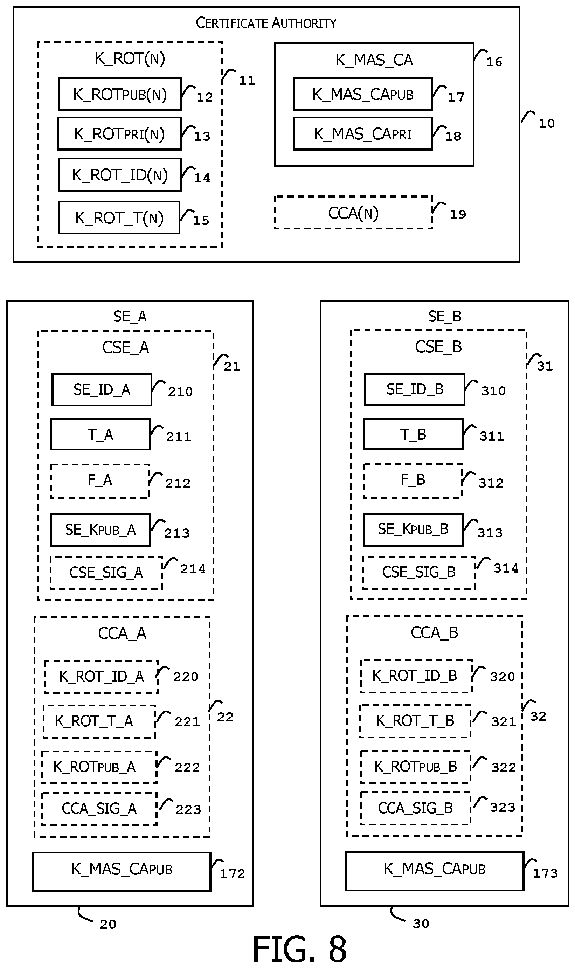

Fig. 8 shows details of data stored in the certificate authority 10 and two hardware secure elements according to an example of the invention. More precisely, Fig. 8 depicts an example of data stored in these entities after execution of step S13 of Fig. 1.

The certificate authority (CA) 10 stores three elements: a CA master key (K_MAS_CA) 16, a temporary key (K_ROT) 11 and a CA certificate (CCA) 19.

The CA master key (K_MAS_CA) 16 is uniquely assigned to the certificate authority 10. Preferably, the CA master key (K_MAS_CA) 16 comprises a public key (K_MAS_CApub) 17 and a private key (K_MAS_CApri) 18. The CA master key (K_MAS_CA) 16 can remain unchanged during a long time.

The temporary key (K_ROT) 11 comprises a public key (K_ROTpub) 12, a private key (K_ROTpri) 13, a key identifier (K_ROT_ID) 14 and a temporary key date (K_ROT_T) 15.

The key identifier (K_ROT_ID) 14 is uniquely assigned to the temporary key (K_ROT) 11.

Preferably, the temporary key date (K_ROT_T) 15 is the generation date of the temporary key (K_ROT) 11.

As explained before in relation to Figure 1, the temporary Key (K_ROT) 11 and the CA certificate (CCA) 19 can change when preset events occur. In other words, content of the current temporary Key (K_ROT) 11 and the CA certificate (CCA) 19 can change from time to time.

A first secure element (SE_A) 20 stores three elements: a SE certificate (CSE_A) 21, a CA certificate (CCA_A) 22 and a public key (K_MAS_CApub) 172 equal to the public key (K_MAS_CApub) 17 of the CA master key (K_MAS_CA) 16.

The CA certificate (CCA_A) 22 can be updated with the new CA certificate (CCA) generated at step S12 and supposed to be stored in the Certificate authority as CA certificate (CCA) 19.

The CA certificate (CCA_A) 22 is a global certificate that can be installed in more than one secure element.

The SE certificate (CSE_A) 21 may comprise several items: an identifier (SE_ID_A) 210, a generation date (T_A) 211, a fraudulent indicator (F_A) 212, a local public key (SE_Kpub_A) 213 and a local signature (CSE_SIG_A) 214 of the SE certificate (CSE_A) 21.

The identifier (SE_ID_A) 210 is uniquely assigned to the first secure element 20. The generation date (T_A) 211 corresponds to the date of generation of the SE certificate (CSE_A) 21. The fraudulent indicator (F_A) 212 can be a counter or any appropriate value reflecting the number of fraudulent secure elements declared in the blacklist 81. The local public key (SE_Kpub_A) 213 is the public part of a key assigned to the SE certificate (CSE_A) 21. The local signature 214 has been generated using the private part of the key assigned to the SE certificate 21.

The SE certificate (CSE_A) 21 is a local certificate that is uniquely assigned to the first secure element 20 and that is not installed any other secure element of the batch.

The CA certificate (CCA_A) 22 may comprise several items: a temporary key identifier (K_ROT_ID_A) 220, a key generation date (K_ROT_T_A) 221, a public part of a temporary key (K_ROTpub_A) 222 and a global signature (CCA_SIG_A) 223 of the CA certificate (CCA_A) 22.

The temporary key identifier (K_ROT_ID_A) 220 can be set to the value of the key identifier (K_ROT_ID) 14. The public part of the temporary key (K_ROTpub_A) 222 can set to the value of the public key (K_ROTpub) 12.

The global signature 223 has been generated using the private key 13.

Similarly, a second secure element (SE_B) 30 stores three elements: a SE certificate (CSE_B) 31, a CA certificate (CCA_B) 32 and a public key (K_MAS_CApub) 173 equal to the public key (K_MAS_CApub) 17 of the CA master key (K_MAS_CA) 16.

The CA certificate (CCA_B) 32 can be updated with the new CA certificate (CCA) generated at step S12 and supposed to be stored in the Certificate authority as CA certificate (CCA) 19.

The SE certificate (CSE_B) 31 may comprise several items: an identifier (SE_ID_B) 310, a generation date (T_B) 311, a fraudulent indicator (F_B) 312, a local public key (SE_Kpub_B) 313 and a local signature (CSE_SIG_B) 314 of the SE certificate (CSE_B) 31.

The identifier (SE_ID_B) 310 is uniquely assigned to the second secure element 30. The generation date (T_B) 311 corresponds to the date of generation of the SE certificate (CSE_B) 31. The fraudulent indicator (F_B) 312 can be a counter or any appropriate value reflecting the number of fraudulent secure elements known by the CTC at the time of the local certificate generation. The local public key (SE_Kpub_B) 313 is the public part of a key assigned to the SE certificate (CSE_B) 31.

The local signature 314 has been generated using the private part of the key assigned to the SE certificate (CSE_B) 31.

The SE certificate (CSE_B) 31 is a local certificate that is uniquely assigned to the second secure element 30 and that is not installed any other secure element of the batch.

The CA certificate (CCA_B) 32 may comprise several items: a temporary key identifier (K_ROT_ID_B) 320, a key generation date (K_ROT_T_B) 321, a public part of a temporary key (K_ROTpub_B) 322 and a global signature (CCA_SIG_B) 323 of the CA certificate (CCA_B) 32.

The temporary key identifier (K_ROT_ID_B) 320 can be set to the value of the key identifier (K_ROT_ID) 14. The public part of the temporary key (K_ROTpub_B) 322 can be set to the value of the public key (K_ROTpub) 12.

The global signature 323 has been generated using the private key 13.

The CA certificate (CCA_B) 32 is a global certificate that can be installed in more than one secure element.

Now treatment of an offline transaction between two secure elements will be detailed by reference to Figures 2 to 6.

Fig. 2 shows a first part of an exemplary flow diagram for managing an offline transaction between two hardware secure elements according to an example of the invention.

At step S14, when a point-to-point transaction (i.e. an offline transaction) occurs between the first secure element 20 and the second secure element 30, the first secure element gets the temporary key identifier (K_ROT_ID_B) 320 included in the CA certificate (CCA_B) 32 stored in the second secure element 30. It should be noted that sending only the temporary key identifier (K_ROT_ID_B) 320 between the two secure elements is sufficient at this stage. (No need to send the entire global certificate 32.)

Following receipt of the temporary key identifier (K_ROT_ID_B) 320, the first secure element compares the temporary key identifier 320 to the temporary key identifier (K_ROT_ID_A) 220 included in the CA certificate (CCA_A) 22 stored in the first secure element. (Step S15)

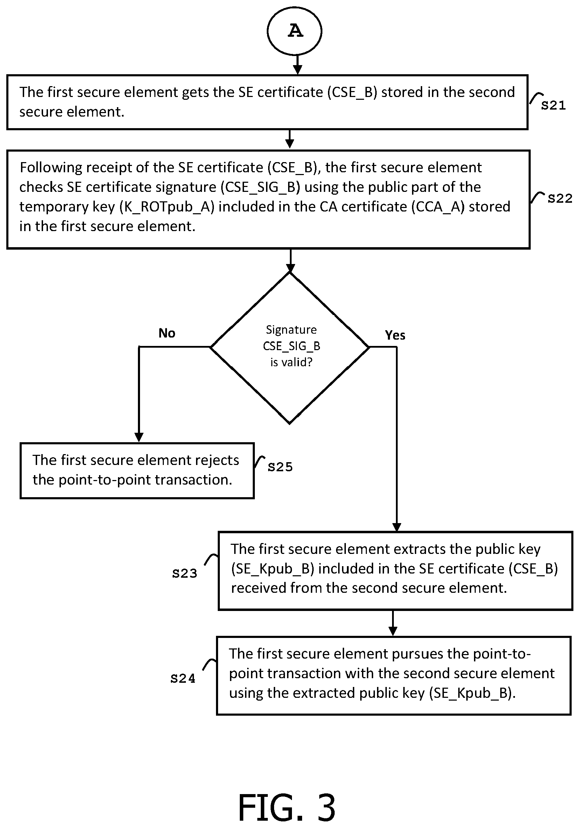

If the comparison shows that said first and second temporary key identifiers are equal, the method continue to Fig. 3 via the label "A".

At step S21 of Fig. 3, the first secure element gets the SE certificate (CSE_B) 31 from the second secure element 30. Following receipt of the SE certificate 32, the first secure element retrieves the local signature (CSE_SIG_B) 314 from the SE certificate 32 and performs a first verification of the local signature (CSE_SIG_B) 314 using the public part of the temporary key (K_ROTpub_A) included in its own global certificate (CCA_A) 22. (Step S22)

Only if the first verification shows that the local signature (CSE_SIG_B) 314 is valid, the first secure element extracts (step S23) the local public key (SE_Kpub_B) 313 from the local certificate (CSE_B) 31 and pursues (step S24) the point-to-point transaction using the extracted local public key 313 to trust transaction parameters exchanged with the second secure element.

If the first verification shows that the local signature (CSE_SIG_B) 314 is invalid, the first secure element rejects the offline transaction at step S25.

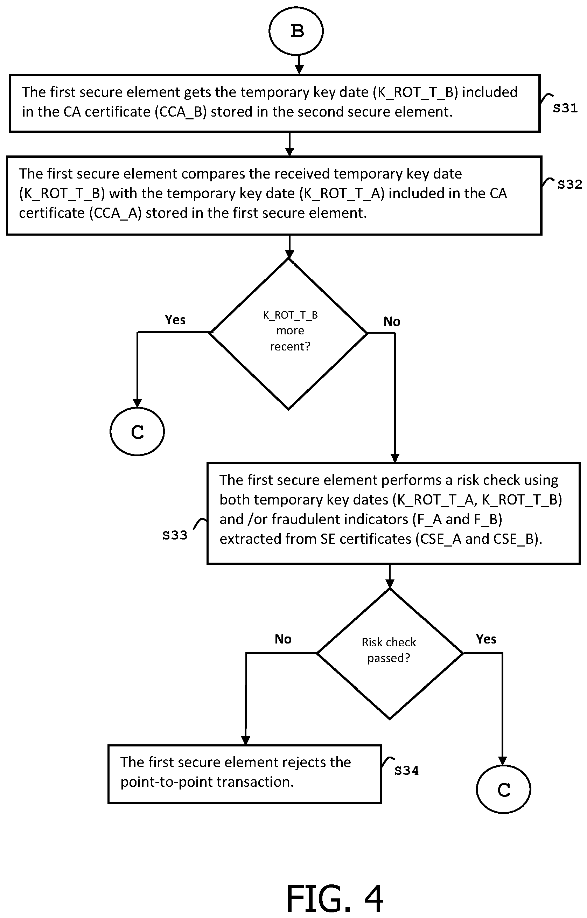

Coming back to step S15 of Fig.2, if the comparison shows that the first and second temporary key identifiers (K_ROT_ID_A and K_ROT_ID_B) are not equal, the method continue to Fig. 4 via the label "B".

In some embodiments, at step S31 of Fig. 4, the first secure element 20 gets the temporary key date (K_ROT_T_B) 321 included in the CA certificate (CCA_B) 32. Then the first secure element performs a control by comparing the received temporary key date (K_ROT_T_B) 321 with the temporary key date (K_ROT_T_A) 221 included in its own CA certificate (CCA_A) 22 at step S32.

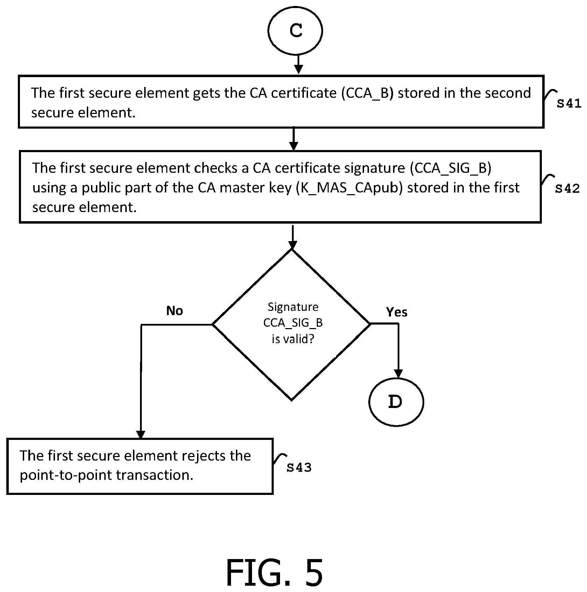

In some embodiments, if the control shows that the second temporary key date (K_ROT_T_B) 321 is later than the first temporary key (K_ROT_T_A) 221, the method continues to Fig. 5 via the label "C".

In some embodiments, at step S41 of Fig. 5, the first secure element gets the CA certificate (CCA_B) 32 stored in the second secure element. Then the first secure element checks the CA certificate signature (CCA_SIG_B) 323 using the public part of the CA master key (K_MAS_CApub) 172 stored in the first secure element (step S42).

In some embodiments, if the CA certificate signature (CCA_SIG_B) 323 is invalid, the first secure element rejects the point-to-point transaction at step S43.

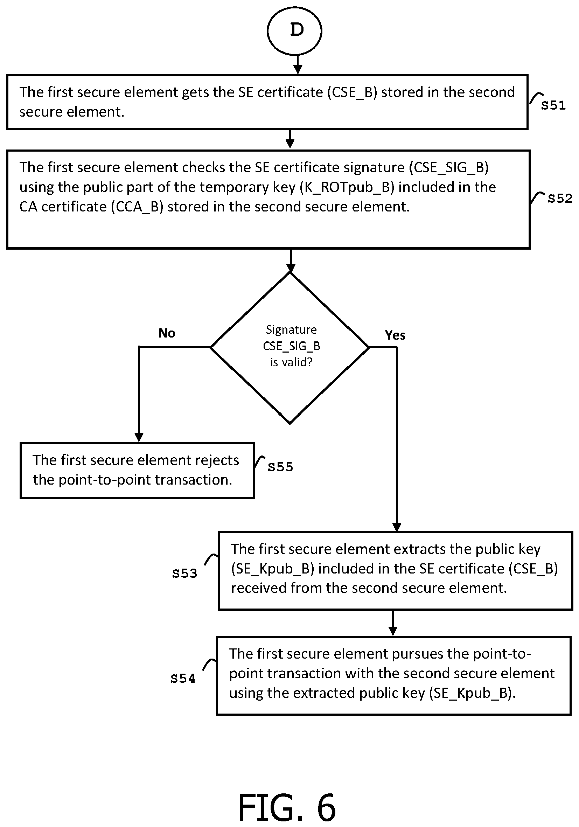

In some embodiments, if the CA certificate signature (CCA_SIG_B) 323 is valid, the method continues to Fig. 6 via the label "D".

In some embodiments, at step S51 of Fig. 6, the first secure element gets the SE certificate (CSE_B) 31 from the second secure element 30. Then at step 52, the first secure element checks the SE certificate signature (CSE_SIG_B) 314 using the public part of the temporary key (K_ROTpub_B) 322 extracted from the CA certificate (CCA_B) 32 received from the second secure element.

In some embodiments, if the SE certificate signature (CSE_SIG_B) 314 is valid, the first secure element extracts the public key (SE_Kpub_B) 313 from the SE certificate (CSE_B) 31 received from the second secure element (step S53). Then the first secure element pursues the point-to-point transaction with the second secure element using the extracted public key (SE_Kpub_B) 313 (step S54).

In some embodiments, if the SE certificate signature (CSE_SIG_B) 314 is invalid, the first secure element rejects the point-to-point transaction (step S55).

In some embodiments, the first secure element may execute the verification of the global certificate signature 323 and the control in another order as long as the first secure element performs the verification of the local signature (CSE_SIG_B) 314 only if the control shows that the second temporary key date is later than the first temporary key and/or the verification of the global certificate signature 323 shows that the global signature 323 is valid.

In some embodiments, if the control (of Fig. 4) shows that the second temporary key date (K_ROT_T_B) 321 is not later than the first temporary key (K_ROT_T_A) 221, the first secure element performs a risk assessment using both first and second temporary key dates (K_ROT_T_A, K_ROT_T_B) 221, 321 and/or the fraudulent indicators (F_A, F_B) 212, 312 extracted from the respective SE certificates. (Step S33)

In some embodiments, if the risk assessment fails, the first secure element rejects the point-to-point transaction. (Step S34)

In some embodiments, if the risk assessment is not successfully passed, the first secure element the method continues to Fig. 5 via the label "C" as described above.

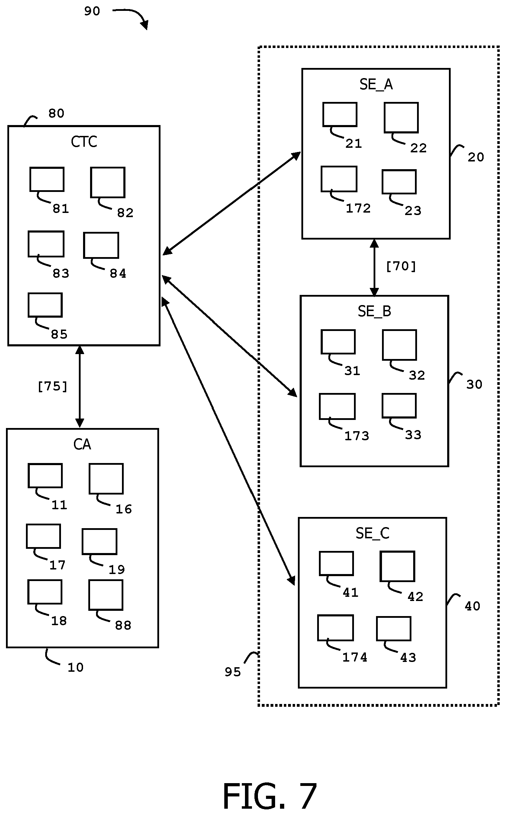

Fig. 7 depicts a diagram of architecture of a system 90 according to an example of the invention.

In this example, the system 90 comprises a central transaction collector (CTC) 80, a Certificate Authority (CA) 10 and a batch 95 of three secure elements 20, 30 and 40 designed to manage their own purse of digital currency. Each secure element may be a smart card embedding both a battery, a display and a keypad.

Each secure element of the batch 95 comprises a secure chip, a first physical communication interface designed to exchange data with another secure element of the batch and a second physical communication interface designed to exchange data with the central transaction collector (CTC) 80. The first physical communication interface may be designed to exchange data with a reader through a wired or wireless channel. For instance, the second communication interface may be compliant with ISO/IEC7816 standard or ISO/IEC14443 standard.

The second communication interface may be designed to exchange data through a wireless channel. For instance, the first communication interface may be compliant with Bluetooth Low Energy^{©} (BLE), Wi-Fi or NFC (Near Field Communication) technology.

In some embodiments, the first and second communication interfaces may be merged in a single communication interface.

A secure element may rely on a physical terminal embedding the appropriate communication interfaces for establishing a link with another secure element or the CTC. The physical terminal may host a local agent that can facilitate the communication between the secure element using the aforementioned communication interface/protocols and with the CTC using IP connectivity (Ethernet, Wi-Fi, GSM... + HTTP /TCP, UDP for instance).

The local agent can be a piece of software running on the physical terminal that has input/output interfaces (like a display and a keyboard) for the users. The physical terminal may be a smartphone, a laptop or a tablet PC.

In some embodiments, a secure element behaves as a pure slave responding to requests of the physical terminal.

The local agent can orchestrate the communication between the parties involved in a transaction: the user(s), the payer SE, the payee SE, and when appropriate, the CTC or any other required party.

The secure chip of a secure element comprises a hardware processor and a non-volatile memory (not shown). The non-volatile memory stores an operating system that includes software instructions that are executed by the processor to perform the features of the secure chip. The secure element may be based on a conventional smart card chip with additional features.

The secure element 20 comprises a local certificate 21, a global certificate 22, a public key 172 of the master key of the Certificate Authority, a purse manager 23, its own purse balance (not shown) and its own offline transaction log (not shown).

The secure element 30 a local certificate 31, a global certificate 32, a public key 173 of the master key of the Certificate Authority, a purse manager 33, its own purse balance (not shown) and its own offline transaction log (not shown).

Similarly, the secure element 40 a local certificate 41, a global certificate 42, a public key 174 of the master key of the Certificate Authority, a purse manager 43, its own purse balance (not shown) and its own offline transaction log (not shown).

The Certificate Authority (CA) 10 comprises a hardware computer and program instructions configured to executed its services and internal functions.

The Certificate Authority 10 comprises a key generator 87 configured to generate temporary keys. The Certificate Authority 10 comprises the last generated temporary key (K_ROT) 11 also named current temporary key.

The Certificate Authority can comprise a first certificate generator 86 configured to generate a local certificate tied to an identified secure element of the batch 95 upon request of the CTC.

The Certificate Authority can comprise a second certificate generator 88 configured to generate a global certificate tied to Certificate Authority itself by using the current temporary key 11.

The Certificate Authority 10 comprises the current global certificate 89 that is the last generated global certificate that can be distributed to more than one secure elements.

The Certificate Authority 10 comprises its own master key 16 whose public part 17 is distributed in all secure elements of the batch 95.

The CTC 80 comprises a hardware computer and program instructions configured to executed its services and internal functions. The CTC 80 can comprise a blacklist manager 82 adapted to store and maintain a blacklist 81 of secure elements (belonging to the batch 95) deemed to be compromised. The blacklist may contain an identifier of the secure elements that are considered to have been hacked and no longer trustworthy.

The CTC 80 comprises a coordinating engine 83 configured to request the Certificate authority 10 to generate a new temporary key and a new global certificate when a predefined event occurs. Both the CTC 80 and the CA 10 are adapted to exchange messages 75 to this purpose. The CTC 80 may be configured to send to the CA 10 all data required to generate an appropriate local or global certificate. For instance, the CTC 80 may send the number of secure elements declared in the blacklist 81 and the identifier of the secure element for which a local certificate is to be generated.

In some embodiment, both the CTC 80 and the CA 10 may be merged in a single entity hosted by a single hardware system.

When an online channel is established between the CTC and a connected secure element belonging to the batch 95, if the CTC 80 considers that the connected secure element does not belong to the blacklist 81, the coordinating engine 83 is configured to request the Certificate authority 10 to generate a new local certificate tied to the connected secure element and to send both the new local certificate and the new global certificate to the connected secure element. For example, the new local certificate will be stored as SE certificate 21 in the first secure element 20 and the new global certificate will be stored as CA certificate 22 in the first secure element 20.

The CTC 80 can comprise a storage area 84 for storing online and offline transactions and a transaction verifier 85. When an online channel is established between the CTC and a connected secure element, the CTC can retrieve the transaction log stored in the connected secure element. Then the transaction verifier 85 can apply a correlation check to the retrieved transaction log. Typically, such correlation check may include a verification of the content of the transaction log taken in isolation. The correlation check may also include a verification of the consistency of the transaction log data with the transaction histories retrieved from other secure elements of the batch 95. Thus, the CTC 80 can detect that the recovered transaction log is tainted with irregularities and place the identifier of the connected secure element in the blacklist 81. Thus, if the correlation check shows that the connected secure element is fraudulent, then the CTC 80 includes the connected secure element in the blacklist 81 and does not send any new local or global certificate to the connected secure element.

At Fig.7, the CTC 80 has initialized the local and global certificates of the secure elements 20, 30 and 40 with an initial values during a preliminary phase. Depending on the history of each secure element, its own local and global certificates may have been updated by the CTC once or several times.

When the secure elements 20 and 30 starts a point-to-point transaction together (i.e. an offline transaction without connectivity with the CTC), each of these secure elements is configured to automatically performed the sequence of checks according to the invention in order to make the decision either to pursue the transaction with the other secure element or to reject the transaction. In other words, both secure elements involved in the offline transaction perform a mutual authentication based on the set of local and global certificates installed in these secure elements. It may happen that one secure element accept to pursue the transaction while the other secure element rejects the transaction.

The above-presented embodiments can be combined.

Although presented for a smart card, some embodiments of the invention may also apply to hardware secure elements having various form factors. For instance, a secure element may be a ring, a bracelet, a keychain or a microchip inserted under the skin.

Although presented for hardware secure elements managing financial transactions through digital currency wallets, some embodiments of the invention may also apply to secure elements managing other type of point-to-point transactions. For instance, the invention can apply to a batch of secure elements able to perform transactions aiming at requesting access to a physical area or resource, alight mobility fleet sharing (e.g. electric scooters), redeeming loyalty points or transferring credentials. For example, the invention could apply to secure elements designed to perform transactions aiming exchanging credits/rights/points associated with a game.

Thanks to some embodiments of the invention, each secure element contains both its own local certificate uniquely tied to it and a global certificate tied to the Certificate Authority. According to some embodiments of the invention, each secure element involved in an offline transaction automatically performs a sequence of checks to decide whether the transaction should be continued or rejected. Once detected as a hacked secure element, a bad secure element, which is declared in the blacklist, will never get the further updated certificates and thus will be removed from the circle of trust established by the combinations of local and global certificates.

Some embodiments of the invention encourage secure elements to connect to the central transaction collector on a regular basis (or even as often as possible). This is also beneficial to the way the central transaction collector works to reduce the risk of fraud (by checking retrieved transaction logs) as well as optimize the time window of transactions it works on.

Thanks to some embodiments of the invention, a payee secure element may autonomously apply security checks to accept or reject a point-to-point transaction with a payer secure element without connecting the CTC during the transaction.

Thanks to some embodiments of the invention, the receipt (and thus transfer) of a single entire certificate (i.e. the local certificate plus only a part of the global certificate) is sufficient to make a decision to pursue or stop the transaction with the other secure element involved in the offline transaction.

The invention is not limited to the described embodiments or examples. In particular, the described features of the presented embodiments may be combined as can be understood by those skilled in the art. The batch may comprise a large number of hardware secure elements having different form factors.

## Claims

1. A method for managing a batch (95) of hardware secure elements, said batch comprising a first secure element (20) and a second secure elements (30);
wherein the first secure element comprises a first local certificate (21, CSE_A), a first global certificate (22, CCA_A), both generated by a certificate authority (10, CA), and a public key part (17, K_MAS_CApub) of a master key uniquely assigned to said certificate authority;
wherein the second secure element comprises a second local certificate (31, CSE_B), a second global certificate (32, CCA_B), both generated by the certificate authority, and said public key part (17, K_MAS_CApub);
wherein when a point-to-point transaction occurs between said first and second secure elements, the first secure element performs a comparison between a first temporary key identifier (210, K_ROT_ID_A) extracted from the first global certificate (CCA_A) and a second temporary key identifier (320, K_ROT_ID_B) extracted from the second global certificate (CCA_B);
wherein if said comparison shows that said first and second temporary key identifiers are equal, the first secure element performs a first verification of a local signature (314, CSE_SIG_B) of the second local certificate (CSE_B) using a public part of a temporary key (K_ROTpub_A) included in said first global certificate (CCA_A);
wherein if said first verification shows that the local signature is valid, the first secure element extracts a local public key (313, SE_Kpub_B) from the second local certificate (CSE_B) and pursues the point-to-point transaction using the local public key to trust transaction parameters exchanged with said second secure element;
wherein if said first verification shows that the local signature is invalid, the first secure element rejects the point-to-point transaction; and
wherein if said comparison shows that said first and second temporary key identifiers are different, depending at least one additional check performed by the first secure element, the first secure element rejects the point-to-point transaction or performs a second verification of a global signature (323, CCA_SIG_B) of the second global certificate (CCA_B) using a public part of a master key (17, K_MAS_CA_{PUB}) stored in said first secure element; wherein if said second verification shows that the global signature is valid, the first secure element performs a third verification of a local signature (314, CSE_SIG_B) of the second local certificate (CSE_B) using a public part of a temporary key (K_ROTpub_B) included in said second global certificate (CCA_B); if said second verification shows that the global signature is invalid or said third verification shows that the local signature is invalid, the first secure element rejects the point-to-point transaction; and if said third verification shows that the local signature is valid, the first secure element extracts a local public key (313, SE_Kpub_B) from the second local certificate (32, CSE_B) and pursues the point-to-point transaction using the local public key to trust transaction parameters exchanged with said second secure element.

2. The method according to claim 1, wherein if said comparison shows that said first and second temporary key identifiers are different, the first secure element performs a control using a first temporary key date (221, K_ROT_T_A) extracted from the first global certificate (CCA_A) and a second temporary key date (321, K_ROT_T_B) extracted from the second global certificate (CCA_B);
wherein the first secure element performs a fourth verification of a global signature (323, CCA_SIG_B) of the second global certificate (CCA_B) using the public part of the public key part (17, K_MAS_CApub) of the master key stored in said first secure element;
wherein if said control shows that said second temporary key date is later than said first temporary key and said fourth verification shows that the global signature is valid, the first secure element performs said third verification of the local signature (314, CSE_SIG_B) of the second local certificate (CSE_B) using the public part of the temporary key (K_ROTpub_A);
wherein if said fourth verification shows that the global signature is invalid, the first secure element rejects the point-to-point transaction.

3. The method according to claim 2, wherein if said control shows that said second temporary key date is not later than said first temporary key, the first secure element performs a risk assessment using both said first and second temporary key dates (K_ROT_T_A, K_ROT_T_B);
wherein if said risk assessment is passed, the first secure element performs said fourth verification; and
wherein if said risk assessment is not passed, the first secure element rejects the point-to-point transaction.

4. The method according to claim 3, wherein said risk assessment is performed using a first fraudulent indicator (212, F_A) extracted from the first local certificate (CSE_A) and/or a second fraudulent indicator (312, F_B) extracted from the second local certificate (CSE_B).

5. The method according to claim 1, wherein a central transaction collector (80), CTC, maintains a blacklist (81) of secure elements deemed to be compromised;
wherein when a predefined event occurs, the CTC requests the Certificate authority (10) to generate a new temporary key (K_ROT) and a new global certificate (CCA);
wherein, when an online channel is established between the CTC and a connected secure element belonging to the batch, if the secure element does not belong to the blacklist, the CTC requests the Certificate authority (10) to generate a new local certificate (CSE_A) tied to the connected secure element and sends both the new local certificate and the new global certificate (CCA) to the connected secure element.

6. The method according to claim 5, wherein when said online channel is established between the CTC and said connected secure element, the CTC retrieves a transaction log from the connected secure element and applies a correlation check to the retrieved transaction log; and
wherein if the correlation check shows that the connected secure element is fraudulent, then the CTC includes the connected secure element in the blacklist.

7. The method according to claim 5, wherein the predefined event is a detection of a fraudulent secure element by the central transaction collector.

8. The method according to claim 5, wherein the predefined event is a preset timer.

9. The method according to claim 1, wherein each secure element of the batch comprises their own purse balance of a digital currency and their own transaction log;
wherein the point-to-point transaction is a transfer of value from the first secure element acting as a payer to the second secure element acting as payee; and
wherein if the second secure element accepts the point-to-point transaction, the second secure element updates both its own transaction log and an internal representation of its own purse balance with said transaction information.

10. The method according to claim 1, wherein each of the secure elements of the batch is one of the following types: smart card, ring, keychain and bracelet.

11. A system (90) comprising a batch of hardware secure elements, said batch comprising a first secure element (20) and a second secure elements (30);
wherein the first secure element comprises a first local certificate (21, CSE_A), a first global certificate (22, CCA_A), both generated by a certificate authority (10, CA), and a public key part (17, K_MAS_CApub) of a master key uniquely assigned to said certificate authority;
wherein the second secure element comprises a second local certificate (31, CSE_B), a second global certificate (32, CCA_B), both generated by the certificate authority, and said public key part (17, K_MAS_CApub);
wherein when a point-to-point transaction occurs between said first and second secure elements, the first secure element is configured to perform a comparison between a first temporary key identifier (210, K_ROT_ID_A) extracted from the first global certificate (CCA_A) and a second temporary key identifier (320, K_ROT_ID_B) extracted from the second global certificate (CCA_B);
wherein if said comparison shows that said first and second temporary key identifiers are equal, the first secure element is configured to perform a first verification of a local signature (314, CSE_SIG_B) of the second local certificate (CSE_B) using a public part of a temporary key (K_ROTpub_A) included in said first global certificate (CCA_A);
wherein if said first verification shows that the local signature is valid, the first secure element is configured to extract a local public key (313, SE_Kpub_B) from the second local certificate (CSE_B) and to pursue the point-to-point transaction using the local public key to trust transaction parameters exchanged with said second secure element;
wherein if said first verification shows that the local signature is invalid, the first secure element is configured to reject the point-to-point transaction; and
wherein if said comparison shows that said first and second temporary key identifiers are different, depending at least one additional check performed by the first secure element, the first secure element is configured to reject the point-to-point transaction or to perform a second verification of a global signature (323, CCA_SIG_B) of the second global certificate (CCA_B) using a public part of a master key (17, K_MAS_CA_{PUB}) stored in said first secure element; wherein if said second verification shows that the global signature is valid, the first secure element is configured to perform a third verification of a local signature (314, CSE_SIG_B) of the second local certificate (CSE_B) using a public part of a temporary key (K_ROTpub_B) included in said second global certificate (CCA_B); and if said second verification shows that the global signature is invalid or said third verification shows that the local signature is invalid, the first secure element is configured to reject the point-to-point transaction; and if said third verification shows that the local signature is valid, the first secure element is configured to extract a local public key (313, SE_Kpub_B) from the second local certificate (32, CSE_B) and to pursue the point-to-point transaction using the local public key to trust transaction parameters exchanged with said second secure element.

12. The system according to claim 11, wherein if said comparison shows that said first and second temporary key identifiers are different, the first secure element is configured to perform a control using a first temporary key date (221, K_ROT_T_A) extracted from the first global certificate (CCA_A) and a second temporary key date (321, K_ROT_T_B) extracted from the second global certificate (CCA_B);
wherein the first secure element is configured to perform a fourth verification of a global signature (323, CCA_SIG_B) of the second global certificate (CCA_B) using the public part of the public key part (17, K_MAS_CApub) of the master key stored in said first secure element;
wherein if both said control shows that said second temporary key date is later than said first temporary key and said fourth verification shows that the global signature is valid, the first secure element is configured to perform said first verification of the local signature (314, CSE_SIG_B) of the second local certificate (CSE_B) using the public part of the temporary key (K_ROTpub_A) included in said first global certificate (CCA_A);
wherein if said fourth verification shows that the global signature is invalid, the first secure element is configured to reject the point-to-point transaction.

13. The system according to claim 12, wherein if said control shows that said second temporary key date is not later than said first temporary key, the first secure element is configured to perform a risk assessment using both said first and second temporary key dates (K_ROT_T_A, K_ROT_T_B);
wherein if said risk assessment is passed, the first secure element is configured to perform said fourth verification; and
wherein if said risk assessment is not passed, the first secure element is configured to reject the point-to-point transaction.

14. The system according to claim 13, wherein said risk assessment is performed using a first fraudulent indicator (212, F_A) extracted from the first local certificate (CSE_A) and/or a second fraudulent indicator (312, F_B) extracted from the second local certificate (CSE_B).

15. The system according to claim 11, wherein the system comprises a central transaction collector (80), CTC, configured to maintain a blacklist (81) of secure elements deemed to be compromised;
wherein when a predefined event occurs, the CTC is configured to request the Certificate authority (10) to generate a new temporary key (K_ROT) and a new global certificate (CCA);
wherein, when an online channel is established between the CTC and a connected secure element belonging to the batch, if the secure element does not belong to the blacklist, the CTC is configured to request the Certificate authority (10) to generate a new local certificate (CSE_A) tied to the connected secure element and to send both the new local certificate and the new global certificate (CCA) to the connected secure element.

## Patentansprüche

1. Verfahren zum Verwalten einer Charge (95) von Hardware-Sicherheitselementen, wobei die Charge ein erstes Sicherheitselement (20) und ein zweites Sicherheitselement (30) umfasst;
wobei das erste sichere Element ein erstes lokales Zertifikat (21, CSE_A), ein erstes globales Zertifikat (22, CCA_A), die beide von einer Zertifizierungsstelle (10, CA) erzeugt sind, und einen öffentlichen Schlüsselteil (17, K_MAS_CApub) eines Master-Schlüssels, der der Zertifizierungsstelle eindeutig zugewiesen ist, umfasst;
wobei das zweite sichere Element ein zweites lokales Zertifikat (31, CSE_B), ein zweites globales Zertifikat (32, CCA_B), beide von der Zertifizierungsstelle erzeugt, und den öffentlichen Schlüsselteil (17, K_MAS_CApub) umfasst;
wobei, wenn eine Punkt-zu-Punkt-Transaktion zwischen dem ersten und dem zweiten sicheren Element stattfindet, das erste sichere Element einen Vergleich zwischen einer aus dem ersten globalen Zertifikat (CCA_A) extrahierten ersten temporären Schlüsselkennung (210, K_ROT_ID_A) und einer aus dem zweiten globalen Zertifikat (CCA_B) extrahierten zweiten temporären Schlüsselkennung (320, K_ROT_ID_B) durchführt;
wobei, wenn der Vergleich zeigt, dass der erste und zweite temporäre Schlüsselidentifikator gleich sind, das erste sichere Element eine erste Verifizierung einer lokalen Signatur (314, CSE_SIG_B) des zweiten lokalen Zertifikats (CSE_B) unter Verwendung eines öffentlichen Teils eines temporären Schlüssels (K_ROTpub_A), der in dem ersten globalen Zertifikat (CCA_A) eingeschlossen ist, durchführt;
wobei, wenn die erste Verifizierung zeigt, dass die lokale Signatur gültig ist, das erste sichere Element einen lokalen öffentlichen Schlüssel (313, SE_Kpub_B) aus dem zweiten lokalen Zertifikat (CSE_B) extrahiert und die Punkt-zu-Punkt-Transaktion unter Verwendung des lokalen öffentlichen Schlüssels fortsetzt, um den mit dem zweiten Sicherheitselement ausgetauschten Transaktionsparametern zu vertrauen;
wobei, wenn die erste Verifizierung zeigt, dass die lokale Signatur ungültig ist, das erste sichere Element die Punkt-zu-Punkt-Transaktion ablehnt; und
wobei, wenn der Vergleich zeigt, dass die erste und die zweite temporäre Schlüsselkennung unterschiedlich sind, das erste sichere Element in Abhängigkeit von mindestens einer zusätzlichen Prüfung, die durch das erste sichere Element durchgeführt wird, die Punkt-zu-Punkt-Transaktion zurückweist oder eine zweite Verifizierung einer globalen Signatur (323, CCA_SIG_B) des zweiten globalen Zertifikats (CCA_B) unter Verwendung eines öffentlichen Teils eines in dem ersten sicheren Element gespeicherten Master-Schlüssels (17, K_MAS_CA_{PUB}) durchführt; wobei, wenn die zweite Verifizierung zeigt, dass die globale Signatur gültig ist, das erste sichere Element eine dritte Verifizierung einer lokalen Signatur (314, CSE_SIG_B) des zweiten lokalen Zertifikats (CSE_B) unter Verwendung eines öffentlichen Teils eines temporären Schlüssels (K_ROTpub_B) durchführt, der in dem zweiten globalen Zertifikat (CCA_B) eingeschlossen ist; wenn die zweite Verifizierung ergibt, dass die globale Signatur ungültig ist, oder die dritte Verifizierung ergibt, dass die lokale Signatur ungültig ist, weist das erste sichere Element die Punkt-zu-Punkt-Transaktion zurück; und wenn die dritte Verifizierung ergibt, dass die lokale Signatur gültig ist, extrahiert das erste sichere Element einen lokalen öffentlichen Schlüssel (313, SE_Kpub_B) aus dem zweiten lokalen Zertifikat (32, CSE_B) und setzt die Punkt-zu-Punkt-Transaktion unter Verwendung des lokalen öffentlichen Schlüssels fort, um den mit dem zweiten sicheren Element ausgetauschten Transaktionsparametern zu vertrauen.

2. Verfahren nach Anspruch 1, wobei, wenn der Vergleich zeigt, dass die erste und zweite temporäre Schlüsselkennung unterschiedlich sind, das erste sichere Element eine Kontrolle unter Verwendung eines ersten temporären Schlüsseldatums (221, K_ROT_T_A), extrahiert aus dem ersten globalen Zertifikat (CCA_A), und eines zweiten temporären Schlüsseldatums (321, K_ROT_T_B), extrahiert aus dem zweiten globalen Zertifikat (CCA_B), durchführt;
wobei das erste sichere Element eine vierte Verifizierung einer globalen Signatur (323, CCA_SIG_B) des zweiten globalen Zertifikats (CCA_B) unter Verwendung des öffentlichen Teils des öffentlichen Schlüsselteils (17, K_MAS_CApub) des in dem ersten sicheren Element gespeicherten Master-Schlüssels durchführt;
wobei, wenn die Kontrolle zeigt, dass das Datum des zweiten temporären Schlüssels später als der erste temporäre Schlüssel ist, und die vierte Verifizierung zeigt, dass die globale Signatur gültig ist, das erste sichere Element die dritte Verifizierung der lokalen Signatur (314, CSE_SIG_B) des zweiten lokalen Zertifikats (CSE_B) unter Verwendung des öffentlichen Teils des temporären Schlüssels (K_ROTpub_A) durchführt;
wobei, wenn die vierte Verifizierung zeigt, dass die globale Signatur ungültig ist, das erste sichere Element die Punkt-zu-Punkt-Transaktion ablehnt.

3. Verfahren nach Anspruch 2, wobei, wenn die Kontrolle zeigt, dass das zweite temporäre Schlüsseldatum nicht später als der genannte erste temporäre Schlüssel ist, das erste sichere Element eine Risikobewertung unter Verwendung der beiden ersten und zweiten temporären Schlüsseldaten (K_ROT_T_A, K_ROT_T_B) durchführt;
wobei, wenn die Risikobewertung bestanden wird, das erste sichere Element die vierte Verifizierung durchführt; und
wobei, wenn die Risikobewertung nicht bestanden wird, das erste sichere Element die Punkt-zu-Punkt-Transaktion ablehnt.

4. Verfahren nach Anspruch 3, wobei die Risikobewertung unter Verwendung eines aus dem ersten lokalen Zertifikat (CSE_A) extrahierten ersten Betrugsindikators (212, F_A) und/oder eines aus dem zweiten lokalen Zertifikat (CSE_B) extrahierten zweiten Betrugsindikators (312, F_B) durchgeführt wird.

5. Verfahren nach Anspruch 1, wobei ein zentraler Transaktionssammler (80), CTC, eine schwarze Liste (81) von sicheren Elementen führt, die als kompromittiert erachtet werden;
wobei, wenn ein vorgegebenes Ereignis eintritt, der CTC die Zertifizierungsstelle (10) auffordert, einen neuen temporären Schlüssel (K_ROT) und ein neues globales Zertifikat (CCA) zu erzeugen;
wobei, wenn ein Online-Kanal zwischen dem CTC und einem verbundenen sicheren Element, das zu der Charge gehört, aufgebaut wird, falls das sichere Element nicht zu der schwarzen Liste gehört, der CTC die Zertifizierungsstelle (10) auffordert, ein neues lokales Zertifikat (CSE_A) zu erzeugen, das an das verbundene sichere Element gebunden ist, und sowohl das neue lokale Zertifikat als auch das neue globale Zertifikat (CCA) an das verbundene sichere Element sendet.

6. Verfahren nach Anspruch 5, wobei, wenn der Online-Kanal zwischen dem CTC und dem verbundenen sicheren Element hergestellt ist, der CTC ein Transaktionsprotokoll von dem verbundenen sicheren Element abruft und eine Korrelationsprüfung auf das abgerufene Transaktionsprotokoll anwendet; und
wobei, wenn die Korrelationsprüfung ergibt, dass das verbundene sichere Element betrügerisch ist, der CTC das verbundene sichere Element in die schwarze Liste aufnimmt.

7. Verfahren nach Anspruch 5, wobei das vorgegebene Ereignis eine Erkennung eines betrügerischen Sicherheitselements durch den zentralen Transaktionssammler ist.

8. Verfahren nach Anspruch 5, wobei das vordefinierte Ereignis ein voreingestellter Zeitgeber ist.

9. Verfahren nach Anspruch 1, wobei jedes sichere Element der Charge ein eigenes Guthaben einer digitalen Währung und ein eigenes Transaktionsprotokoll umfasst;
wobei die Punkt-zu-Punkt-Transaktion eine Übertragung von Wert von dem als Zahler fungierenden ersten sicheren Element an das als Zahlungsempfänger fungierende zweite sichere Element ist; und
wobei, wenn das zweite sichere Element die Punkt-zu-Punkt-Transaktion akzeptiert, das zweite sichere Element sowohl sein eigenes Transaktionsprotokoll als auch eine interne Repräsentation seines eigenen Guthabens mit den Transaktionsinformationen aktualisiert.

10. Verfahren nach Anspruch 1, wobei jedes der sicheren Elemente der Charge einer der folgenden Typen ist: Chipkarte, Ring, Schlüsselanhänger und Armband.

11. System (90), umfassend eine Charge von Hardware-Sicherheitselementen, wobei die Charge ein erstes Sicherheitselement (20) und ein zweites Sicherheitselement (30) umfasst;
wobei das erste sichere Element ein erstes lokales Zertifikat (21, CSE_A), ein erstes globales Zertifikat (22, CCA_A), die beide von einer Zertifizierungsstelle (10, CA) erzeugt sind, und einen öffentlichen Schlüsselteil (17, K_MAS_CApub) eines Master-Schlüssels, der der Zertifizierungsstelle eindeutig zugewiesen ist, umfasst;
wobei das zweite sichere Element ein zweites lokales Zertifikat (31, CSE_B), ein zweites globales Zertifikat (32, CCA_B), beide von der Zertifizierungsstelle erzeugt, und den öffentlichen Schlüsselteil (17, K_MAS_CApub) umfasst;
wobei, wenn eine Punkt-zu-Punkt-Transaktion zwischen dem ersten und dem zweiten sicheren Element stattfindet, das erste sichere Element konfiguriert ist, um einen Vergleich zwischen einer aus dem ersten globalen Zertifikat (CCA_A) extrahierten ersten temporären Schlüsselkennung (210, K_ROT_ID_A) und einer aus dem zweiten globalen Zertifikat (CCA_B) extrahierten zweiten temporären Schlüsselkennung (320, K_ROT_ID_B) durchzuführen;
wobei, wenn der Vergleich zeigt, dass der erste und zweite temporäre Schlüsselidentifikator gleich sind, das erste sichere Element konfiguriert ist, um eine erste Verifizierung einer lokalen Signatur (314, CSE_SIG_B) des zweiten lokalen Zertifikats (CSE_B) unter Verwendung eines öffentlichen Teils eines temporären Schlüssels (K_ROTpub_A), der in dem ersten globalen Zertifikat (CCA_A) eingeschlossen ist, durchzuführen;
wobei, wenn die erste Verifizierung zeigt, dass die lokale Signatur gültig ist, das erste sichere Element konfiguriert ist, um einen lokalen öffentlichen Schlüssel (313, SE_Kpub_B) aus dem zweiten lokalen Zertifikat (CSE_B) zu extrahieren und die Punkt-zu-Punkt-Transaktion unter Verwendung des lokalen öffentlichen Schlüssels fortzusetzen, um den mit dem zweiten Sicherheitselement ausgetauschten Transaktionsparametern zu vertrauen;
wobei, wenn die erste Verifizierung zeigt, dass die lokale Signatur ungültig ist, das erste sichere Element konfiguriert ist, um die Punkt-zu-Punkt-Transaktion abzulehnen; und
wobei, wenn der Vergleich zeigt, dass die erste und die zweite temporäre Schlüsselkennung unterschiedlich sind, das erste sichere Element in Abhängigkeit von mindestens einer zusätzlichen Prüfung, die durch das erste sichere Element durchgeführt wird, konfiguriert ist, um die Punkt-zu-Punkt-Transaktion zurückzuweisen oder eine zweite Verifizierung einer globalen Signatur (323, CCA_SIG_B) des zweiten globalen Zertifikats (CCA_B) unter Verwendung eines öffentlichen Teils eines in dem ersten sicheren Element gespeicherten Master-Schlüssels (17, K_MAS_CA_{PUB}) durchzuführen; wobei, wenn die zweite Verifizierung zeigt, dass die globale Signatur gültig ist, das erste sichere Element konfiguriert ist, um eine dritte Verifizierung einer lokalen Signatur (314, CSE_SIG_B) des zweiten lokalen Zertifikats (CSE_B) unter Verwendung eines öffentlichen Teils eines temporären Schlüssels (K_ROTpub_B) durchzuführen, der in dem zweiten globalen Zertifikat (CCA_B) eingeschlossen ist; und wenn die zweite Verifizierung ergibt, dass die globale Signatur ungültig ist, oder die dritte Verifizierung ergibt, dass die lokale Signatur ungültig ist, das erste sichere Element konfiguriert ist, um die Punkt-zu-Punkt-Transaktion zurückzuweisen; und wenn die dritte Verifizierung zeigt, dass die lokale Signatur gültig ist, das erste sichere Element konfiguriert ist, um einen lokalen öffentlichen Schlüssel (313, SE_Kpub_B) aus dem zweiten lokalen Zertifikat (32, CSE_B) zu extrahieren und die Punkt-zu-Punkt-Transaktion unter Verwendung des lokalen öffentlichen Schlüssels fortzusetzen, um den mit dem zweiten Sicherheitselement ausgetauschten Transaktionsparametern zu vertrauen.

12. System nach Anspruch 11, wobei, wenn der Vergleich zeigt, dass die erste und die zweite temporäre Schlüsselkennung unterschiedlich sind, das erste sichere Element konfiguriert ist, um eine Kontrolle unter Verwendung eines ersten temporären Schlüsseldatums (221, K_ROT_T_A), das aus dem ersten globalen Zertifikat (CCA_A) extrahiert ist, und eines zweiten temporären Schlüsseldatums (321, K_ROT_T_B), das aus dem zweiten globalen Zertifikat (CCA_B) extrahiert ist, durchzuführen;
wobei das erste sichere Element konfiguriert ist, um eine vierte Verifizierung einer globalen Signatur (323, CCA_SIG_B) des zweiten globalen Zertifikats (CCA_B) unter Verwendung des öffentlichen Teils des öffentlichen Schlüsselteils (17, K_MAS_CApub) des in dem ersten sicheren Element gespeicherten Master-Schlüssels durchzuführen;
wobei, wenn sowohl die Kontrolle zeigt, dass das Datum des zweiten temporären Schlüssels später als der erste temporäre Schlüssel ist, als auch die vierte Verifizierung zeigt, dass die globale Signatur gültig ist, das erste sichere Element konfiguriert ist, um die erste Verifizierung der lokalen Signatur (314, CSE_SIG_B) des zweiten lokalen Zertifikats (CSE_B) unter Verwendung des öffentlichen Teils des temporären Schlüssels (K_ROTpub_A), der in dem ersten globalen Zertifikat (CCA_A) eingeschlossen ist, durchzuführen;
wobei, wenn die vierte Verifizierung zeigt, dass die globale Signatur ungültig ist, das erste sichere Element konfiguriert ist, um die Punkt-zu-Punkt-Transaktion abzulehnen.

13. System nach Anspruch 12, wobei, wenn die Kontrolle zeigt, dass das zweite temporäre Schlüsseldatum nicht später als der genannte erste temporäre Schlüssel ist, das erste sichere Element konfiguriert ist, um eine Risikobewertung unter Verwendung der beiden ersten und zweiten temporären Schlüsseldaten (K_ROT_T_A, K_ROT_T_B) durchzuführen;
wobei, wenn die Risikobewertung bestanden wird, das erste sichere Element konfiguriert ist, um die vierte Verifizierung durchzuführen; und
wobei, wenn die Risikobewertung nicht bestanden wird, das erste sichere Element konfiguriert ist, um die Punkt-zu-Punkt-Transaktion abzulehnen.

14. System nach Anspruch 13, wobei die Risikobewertung unter Verwendung eines aus dem ersten lokalen Zertifikat (CSE_A) extrahierten ersten Betrugsindikators (212, F_A) und/oder eines aus dem zweiten lokalen Zertifikat (CSE_B) extrahierten zweiten Betrugsindikators (312, F_B) durchgeführt wird.

15. System nach Anspruch 11, wobei das System einen zentralen Transaktionssammler (80), CTC, umfasst, der konfiguriert ist, um eine schwarze Liste (81) von sicheren Elementen zu führen, die als kompromittiert erachtet werden;
wobei, wenn ein vorgegebenes Ereignis eintritt, der CTC konfiguriert ist, um die Zertifizierungsstelle (10) aufzufordern, einen neuen temporären Schlüssel (K_ROT) und ein neues globales Zertifikat (CCA) zu erzeugen;
wobei, wenn ein Online-Kanal zwischen dem CTC und einem verbundenen sicheren Element, das zu der Charge gehört, aufgebaut wird, falls das sichere Element nicht zu der schwarzen Liste gehört, der CTC konfiguriert ist, um die Zertifizierungsstelle (10) aufzufordern, ein neues lokales Zertifikat (CSE_A) zu erzeugen, das an das verbundene sichere Element gebunden ist, und sowohl das neue lokale Zertifikat als auch das neue globale Zertifikat (CCA) an das verbundene sichere Element zu senden.

## Revendications

1. Procédé de gestion d'un lot (95) d'éléments sécurisés matériels, ledit lot comprenant un premier élément sécurisé (20) et un second élément sécurisé (30) ;
dans lequel le premier élément sécurisé comprend un premier certificat local (21, CSE_A), un premier certificat global (22, CCA_A), tous deux générés par une autorité de certificat (10, CA), et une partie de clé publique (17, K_MAS_CApub) d'une clé maîtresse attribuée de manière unique à ladite autorité de certificat ;
dans lequel le second élément sécurisé comprend un second certificat local (31, CSE_B), un second certificat global (32, CCA_B), tous deux générés par l'autorité de certificat, et ladite partie de clé publique (17, K_MAS_CApub) ;
dans lequel lorsqu'une transaction point à point se produit entre lesdits premier et second éléments sécurisés, le premier élément sécurisé effectue une comparaison entre un premier identifiant de clé temporaire (210, K_ROT_ID_A) extrait du premier certificat global (CCA_A) et un second identifiant de clé temporaire (320, K_ROT_ID_B) extrait du second certificat global (CCA_B) ;
dans lequel si ladite comparaison montre que lesdits premier et second identifiants de clé temporaire sont égaux, le premier élément sécurisé effectue une première vérification d'une signature locale (314, CSE_SIG_B) du second certificat local (CSE_B) en utilisant une partie publique d'une clé temporaire (K_ROTpub_A) incluse dans ledit premier certificat global (CCA_A) ;
dans lequel si ladite première vérification montre que la signature locale est valide, le premier élément sécurisé extrait une clé publique locale (313, SE_Kpub_B) du second certificat local (CSE_B) et poursuit la transaction point à point en utilisant la clé publique locale pour faire confiance aux paramètres de transaction échangés avec ledit second élément sécurisé ;
dans lequel si ladite première vérification montre que la signature locale est invalide, le premier élément sécurisé rejette la transaction point à point ; et
dans lequel si ladite comparaison montre que lesdits premier et second identifiants de clé temporaire sont différents, en fonction d'au moins une vérification supplémentaire effectuée par le premier élément sécurisé, le premier élément sécurisé rejette la transaction point à point ou effectue une deuxième vérification d'une signature globale (323, CCA_SIG_B) du second certificat global (CCA_B) en utilisant une partie publique d'une clé maîtresse (17, K_MAS_CA_{PUB}) stockée dans ledit premier élément sécurisé ; dans lequel si ladite deuxième vérification montre que la signature globale est valide, le premier élément sécurisé effectue une troisième vérification d'une signature locale (314, CSE_SIG_B) du second certificat local (CSE_B) en utilisant une partie publique d'une clé temporaire (K_ROTpub_B) incluse dans ledit second certificat global (CCA_B) ; si ladite deuxième vérification montre que la signature globale est invalide ou si ladite troisième vérification montre que la signature locale est invalide, le premier élément sécurisé rejette la transaction point à point ; et si ladite troisième vérification montre que la signature locale est valide, le premier élément sécurisé extrait une clé publique locale (313, SE_Kpub_B) du second certificat local (32, CSE_B) et poursuit la transaction point à point en utilisant la clé publique locale pour faire confiance aux paramètres de transaction échangés avec ledit second élément sécurisé.

2. Procédé selon la revendication 1, dans lequel si ladite comparaison montre que lesdits premier et second identifiants de clé temporaire sont différents, le premier élément sécurisé effectue un contrôle en utilisant une première date de clé temporaire (221, K_ROT_T_A) extraite du premier certificat global (CCA_A) et une seconde date de clé temporaire (321, K_ROT_T_B) extraite du second certificat global (CCA_B) ;
dans lequel le premier élément sécurisé effectue une quatrième vérification d'une signature globale (323, CCA_SIG_B) du second certificat global (CCA_B) en utilisant la partie publique de la partie de clé publique (17, K_MAS_CApub) de la clé maîtresse stockée dans ledit premier élément sécurisé ;
dans lequel si ledit contrôle montre que ladite date de seconde clé temporaire est postérieure à ladite première clé temporaire et que ladite quatrième vérification montre que la signature globale est valide, le premier élément sécurisé effectue ladite troisième vérification de la signature locale (314, CSE_SIG_B) du second certificat local (CSE_B) en utilisant la partie publique de la clé temporaire (K_ROTpub_A) ;
dans lequel si ladite quatrième vérification montre que la signature globale est invalide, le premier élément sécurisé rejette la transaction point à point.

3. Procédé selon la revendication 2, dans lequel si ledit contrôle montre que ladite date de seconde clé temporaire n'est pas postérieure à ladite première clé temporaire, le premier élément sécurisé effectue une évaluation de risque en utilisant à la fois lesdites première et seconde dates de clé temporaire (K_ROT_T_A, K_ROT_T_B) ;
dans lequel, si ladite évaluation des risques est réussie, le premier élément sécurisé effectue ladite quatrième vérification ; et
dans lequel si ladite évaluation de risque n'est pas réussie, le premier élément sécurisé rejette la transaction point à point.

4. Procédé selon la revendication 3, dans lequel ladite évaluation de risque est effectuée en utilisant un premier indicateur frauduleux (212, F_A) extrait du premier certificat local (CSE_A) et/ou un second indicateur frauduleux (312, F_B) extrait du second certificat local (CSE_B).

5. Procédé selon la revendication 1, dans lequel un collecteur central de transactions (80), CTC, maintient une liste noire (81) d'éléments sécurisés réputés compromis ;
dans lequel, lorsqu'un événement prédéfini se produit, le CTC demande à l'autorité de certificat (10) de générer une nouvelle clé temporaire (K_ROT) et un nouveau certificat global (CCA) ;
dans lequel, lorsqu'un canal en ligne est établi entre le CTC et un élément sécurisé connecté appartenant au lot, si l'élément sécurisé n'appartient pas à la liste noire, le CTC demande à l'autorité de certificat (10) de générer un nouveau certificat local (CSE_A) lié à l'élément sécurisé connecté et envoie à la fois le nouveau certificat local et le nouveau certificat global (CCA) à l'élément sécurisé connecté.

6. Procédé selon la revendication 5, dans lequel lorsque ledit canal en ligne est établi entre le CTC et ledit élément sécurisé connecté, le CTC récupère un journal de transactions à partir de l'élément sécurisé connecté et applique une vérification de corrélation au journal de transaction récupéré ; et
dans lequel si la vérification de corrélation montre que l'élément sécurisé connecté est frauduleux, alors le CTC inclut l'élément sécurisé connecté dans la liste noire.

7. Procédé selon la revendication 5, dans lequel l'événement prédéfini est une détection d'un élément sécurisé frauduleux par le collecteur central de transactions.

8. Procédé selon la revendication 5, dans lequel l'événement prédéfini est un temporisateur prédéfini.

9. Procédé selon la revendication 1, dans lequel chaque élément sécurisé du lot comprend son propre solde de porte-monnaie d'une monnaie numérique et son propre journal de transactions ;
dans lequel la transaction point à point est un transfert de valeur du premier élément sécurisé agissant en tant que payeur au second élément sécurisé agissant en tant que bénéficiaire ; et
dans lequel si le second élément sécurisé accepte la transaction point à point, le second élément sécurisé met à jour à la fois son propre journal de transactions et une représentation interne du solde de son propre porte-monnaie avec lesdites informations de transaction.

10. Procédé selon la revendication 1, dans lequel chacun des éléments sécurisés du lot est de l'un des types suivants : carte à puce, bague, porte-clés et bracelet.

11. Système (90) comprenant un lot d'éléments sécurisés matériels, ledit lot comprenant un premier élément sécurisé (20) et un second élément sécurisé (30) ;
dans lequel le premier élément sécurisé comprend un premier certificat local (21, CSE_A), un premier certificat global (22, CCA_A), tous deux générés par une autorité de certificat (10, CA), et une partie de clé publique (17, K_MAS_CApub) d'une clé maîtresse attribuée de manière unique à ladite autorité de certificat ;
dans lequel le second élément sécurisé comprend un second certificat local (31, CSE_B), un second certificat global (32, CCA_B), tous deux générés par l'autorité de certificat, et ladite partie de clé publique (17, K_MAS_CApub) ;
dans lequel, lorsqu'une transaction point à point se produit entre lesdits premier et second éléments sécurisés, le premier élément sécurisé est configuré pour effectuer une comparaison entre un premier identifiant de clé temporaire (210, K_ROT_ID_A) extrait du premier certificat global (CCA_A) et un second identifiant de clé temporaire (320, K_ROT_ID_B) extrait du second certificat global (CCA_B) ;
dans lequel si ladite comparaison montre que lesdits premier et second identifiants de clé temporaire sont égaux, le premier élément sécurisé est configuré pour effectuer une première vérification d'une signature locale (314, CSE_SIG_B) du second certificat local (CSE_B) en utilisant une partie publique d'une clé temporaire (K_ROTpub_A) incluse dans ledit premier certificat global (CCA_A) ;
dans lequel si ladite première vérification montre que la signature locale est valide, le premier élément sécurisé est configuré pour extraire une clé publique locale (313, SE_Kpub_B) du second certificat local (CSE_B) et pour poursuivre la transaction point à point en utilisant la clé publique locale pour faire confiance aux paramètres de transaction échangés avec ledit second élément sécurisé ;
dans lequel si ladite première vérification montre que la signature locale est invalide, le premier élément sécurisé est configuré pour rejeter la transaction point à point ; et
dans lequel si ladite comparaison montre que lesdits premier et second identifiants de clé temporaire sont différents, en fonction d'au moins une vérification supplémentaire effectuée par le premier élément sécurisé, le premier élément sécurisé est configuré pour rejeter la transaction point à point ou pour effectuer une seconde vérification d'une signature globale (323, CCA_SIG_B) du second certificat global (CCA_B) en utilisant une partie publique d'une clé maîtresse (17, K_MAS_CA_{PUB}) stockée dans ledit premier élément sécurisé ; dans lequel si ladite deuxième vérification montre que la signature globale est valide, le premier élément sécurisé est configuré pour effectuer une troisième vérification d'une signature locale (314, CSE_SIG_B) du second certificat local (CSE_B) en utilisant une partie publique d'une clé temporaire (K_ROTpub_B) incluse dans ledit second certificat global (CCA_B) ; et si ladite deuxième vérification montre que la signature globale est invalide ou si ladite troisième vérification montre que la signature locale est invalide, le premier élément sécurisé est configuré pour rejeter la transaction point à point ; et si ladite troisième vérification montre que la signature locale est valide, le premier élément sécurisé est configuré pour extraire une clé publique locale (313, SE_Kpub_B) du second certificat local (32, CSE_B) et pour poursuivre la transaction point à point en utilisant la clé publique locale pour faire confiance aux paramètres de transaction échangés avec ledit second élément sécurisé.

12. Système selon la revendication 11, dans lequel si ladite comparaison montre que lesdits premier et second identifiants de clé temporaire sont différents, le premier élément sécurisé est configuré pour effectuer un contrôle en utilisant une première date de clé temporaire (221, K_ROT_T_A) extraite du premier certificat global (CCA_A) et une seconde date de clé temporaire (321, K_ROT_T_B) extraite du second certificat global (CCA_B) ;
dans lequel le premier élément sécurisé est configuré pour effectuer une quatrième vérification d'une signature globale (323, CCA_SIG_B) du second certificat global (CCA_B) en utilisant la partie publique de la partie de clé publique (17, K_MAS_CApub) de la clé maître stockée dans ledit premier élément sécurisé ;
dans lequel si à la fois ledit contrôle montre que la date de ladite seconde clé temporaire est postérieure à ladite première clé temporaire et ladite quatrième vérification montre que la signature globale est valide, le premier élément sécurisé est configuré pour effectuer ladite première vérification de la signature locale (314, CSE_SIG_B) du second certificat local (CSE_B) en utilisant la partie publique de la clé temporaire (K_ROTpub_A) incluse dans ledit premier certificat global (CCA_A) ;
dans lequel si ladite quatrième vérification montre que la signature globale est invalide, le premier élément sécurisé est configuré pour rejeter la transaction point à point.

13. Système selon la revendication 12, dans lequel si ledit contrôle montre que ladite date de seconde clé temporaire n'est pas postérieure à ladite première clé temporaire, le premier élément sécurisé est configuré pour effectuer une évaluation de risque en utilisant à la fois lesdites première et seconde dates de clé temporaire (K_ROT_T_A, K_ROT_T_B) ;
dans lequel si ladite évaluation de risque est réussie, le premier élément sécurisé est configuré pour effectuer ladite quatrième vérification ; et
dans lequel si ladite évaluation de risque n'est pas exécutée avec succès, le premier élément sécurisé est configuré pour rejeter la transaction point à point.

14. Système selon la revendication 13, dans lequel ladite évaluation de risque est effectuée en utilisant un premier indicateur frauduleux (212, F_A) extrait du premier certificat local (CSE_A) et/ou un second indicateur frauduleux (312, F_B) extrait du second certificat local (CSE_B).

15. Système selon la revendication 11, dans lequel le système comprend un collecteur central de transactions (80), CTC, configuré pour maintenir une liste noire (81) d'éléments sécurisés considérés comme compromis ;
dans lequel, lorsqu'un événement prédéfini se produit, le CTC est configuré pour demander à l'autorité de certificat (10) de générer une nouvelle clé temporaire (K_ROT) et un nouveau certificat global (CCA) ;
dans lequel, lorsqu'un canal en ligne est établi entre le CTC et un élément sécurisé connecté appartenant au lot, si l'élément sécurisé n'appartient pas à la liste noire, le CTC est configuré pour demander à l'autorité de certificat (10) de générer un nouveau certificat local (CSE_A) lié à l'élément sécurisé connecté et d'envoyer à la fois le nouveau certificat local et le nouveau certificat global (CCA) à l'élément sécurisé connecté.
